# EUROPEAN PATENT APPLICATION

(11) **EP 1 995 730 A1**
(43) Date of publication of application: **26.11.2008**
(21) Application number: 08101839.2
(22) Date of filing: 21.02.2008
(51) Int. Cl.: G11B 20/00, H04N 7/167, H04N 5/913

(54) **Method and apparatus for restricting the output of a reproduction device to output ports applying transmission content protection**

(30) Priority: 25.05.2007 KR 20070050998
(71) Applicant: Samsung Electronics Co., Ltd., Suwon-si, Gyeonggi-do 442-743 (KR)
(72) Inventor: Lee, Choong-hoon, Seoul (KR); Yao, Jun, Gyeonggi-do (KR); You, Yong-kuk, Seoul (KR)
(74) Representative: Walaski, Jan Filip

(57) **Abstract**

Provided are a method and apparatus for controlling an output of a content device. The method includes: receiving a request signal that requests the use of encrypted content; executing software for decrypting the encrypted content in response to the received request signal; and controlling the decrypted content to be output through an output port that is allowed by the executed software.
In particular, the output of the decrypted content is refused to an output port that does not apply transmission content protection like high-bandwith digital content protection (HDCP).

## Description

The present invention relates to controlling an output of a content device, and more particularly, to controlling a content device to output contents through an output port allowed by software which is executed for decrypting the contents in response to a request signal that is received from an external source.

Due to widespread illegal copying of digital content, various technologies for protecting content have been researched and developed. Such technologies include conditional access systems (CAS) for broadcasting content protection; digital rights management (DRM), which determines whether the content will be used according to the use right of the content; content scrambling systems (CSS); content protection for recordable media (CPRM); and advanced access content systems (AACS) for protection of storage media.

Such content protection technologies use encryption technology, and allow only users or devices having the right to use content in an appropriate way.

Most conventional content devices have their own specific content protection systems initially. In the case of these specific content protection systems, since the types of usable content are initially determined, users are restricted in freely using the content and selecting a service.

In other words, with regard to use of content, a device is not able to use the content to which DRM that is not supported by the device is applied, and also is not able to transfer the content that the device is using to another device that supports the DRM. For example, content to which a DRM solution of company A is applied cannot be used by a device in which a DRM solution of company B is implemented. Accordingly, such a predetermined content protection system limits the types of content which can be used in a device, thereby inconveniencing a user.

Such inconvenience increases when networking of content devices is accelerated. In an environment where a broadcasting service has been already available using an Internet protocol television (IPTV) and also various services will be available using other devices through a wired/wireless network, if there is a certain device that has a particular content protection technology such as DRM, users are more restricted in using the services. One method of overcoming this problem is to provide a content protection system in the form of software or firmware so that the content protection system can be installed in the device dynamically. In other words, a user is allowed to freely install a content protection system that is applied to content that the user wants to use and the content protection system is in the form of software so that the user can use a variety of content regardless of the type of the content protection systems.

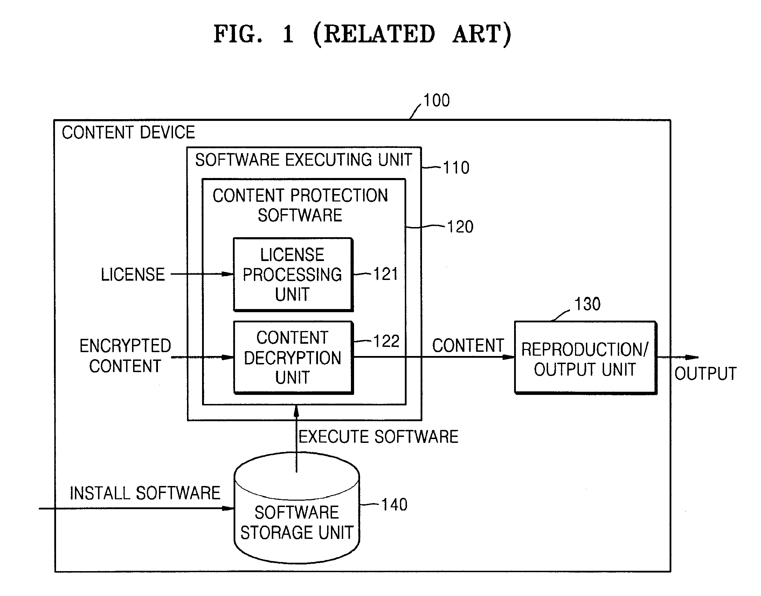

FIG. 1 is a block diagram of a content device 100 that reproduces content and in which a content protection system in the form of software is installed.

One or more different content protection systems can be installed in the content device 100. The content device 100 has a structure that decrypts the content or controls the use of the content by executing the content protection system such as DRM when using the content. The content device 100 may be a digital TV, a set-top box, an MP3 player, a portable video player, a digital video unit (DVD) player, a Blu-Ray player, or the like.

Referring to FIG. 1, the content device 100 includes a software executing unit 110 which executes software, a reproduction/output unit 130 which reproduces or outputs the content, and a software storage unit 140. The DRM software 120, which is executed in the software executing unit 110, includes a license processing unit 121 which processes a content key or a license, and a content decryption unit 122 which decrypts the content that is secured by means of encryption.
The procedures of using the content that is secured using, for example, DRM in the content device 100 are as follows. When a user wants to use the content, for example, reproduce the content or move the content to an external device, the content device 100 executes the DRM software 120 for controlling the use of the content. The DRM software 120, which is executed by the software executing unit 110, interprets the license showing the right of use of the corresponding content and determines whether or not the content can be used, and if it is determined that the content can be used, the DRM software 120 decrypts the content using the content decryption unit 122. The decrypted content is reproduced or transmitted to the external device by the reproduction/output unit 130. Although the content protection system used in the content device 100 is the DRM software 120, the content protection system can be CAS software or any other type of content protection software.

A content protection system such as DRM defines requirements for safe distribution of content which a device has to comply with, and when the content protection system is applied to the device, the device has to be produced in accordance with the requirements. Examples of such requirements are robustness rules and compliance rules. Any content protection system standardization organizations and DRM solution companies define the robustness rules and compliance rules for individual systems, and if the device in which the content protection system is embodied is produced without complying with such requirements, the device cannot be authenticated by the corresponding standardization organization or DRM company.

The compliance rules are a set of rules that a device or software to which a specific content protection technology is applied has to follow when using content. For example, when a device outputs content to an external source, the compliance rules may define that "content can be output only through an output port to which a digital transmission content protection (DTCP) link protection technology is applied".

A DRM system issues a license which shows the right of use or rules for each content, and controls the use of the corresponding content according to the right of use shown in the license. However, the compliance rules are set aside from the license, and are the general rules that the device has to comply with regardless of the types of the content. In this case, the use of the content is controlled by applying both the license and the compliance rules. That is, the content device has to be designed to operate in accordance with the compliance rules of a content protection system that is applied to the content device.

The compliance rules are defined for individual content protection technologies or products, and different content protection technologies have different compliance rules. In other words, different content protection systems have different types of output ports that they allow the content to be output through. Consequently, if a content device in which a content protection system can be dynamically installed and executed is produced, it is not possible to apply compliance rules of a particular content protection system to the content device when producing the content device. Therefore, it is required that when the content protection software is installed in the device, compliance rules of the software are applied to the content device dynamically so that the use of the content can be controlled according to the applied compliance rules.

The present invention provides a method and apparatus for dynamically controlling an output of a content device so that the content device can satisfy compliance rules required by content protection software.

The present invention provides a method through which a content device can comply with compliance rules that are required by content protection software when one or more pieces of the content protection software are installed and executed in the content device. Specifically, when one or more pieces of content protection software are installed in the content device and the content device desires to use specific content, particular content protection software corresponding to the content is executed. Therefore, when the particular content protection software is executed, the apparatus according to the present invention controls the output of the content according to the compliance rules that are required by the corresponding software.

According to an aspect of the present invention, there is provided a method of controlling an output of a content device, the method comprising: receiving a request signal that requests use of encrypted content; executing software for decrypting the encrypted content in response to the received request signal; and controlling the decrypted content to be output through an output port that is allowed by the executed software.

The controlling the decrypted content may further comprise reading output control information about the output port that is allowed by the software; and controlling the output of the content based on the read output control information.

The output control information may describe the types of output ports that are allowed by the software when the content is output, or describe the types of output ports to which a content protection technology that is allowed by the software is applied, and the output control information may be devised in a form that can be interpreted by software or hardware.

The output control information may be defined by the software and stored in a predetermined storage medium when the software is installed in the content device, and the output control information corresponding to the software may be read from the storage medium in the course of executing the software.

The output control information may be included in execution code of the software, and the output control information may be read from the software in the course of executing the software.

The controlling of the output of the decrypted content may comprise refusing the output of the content when an output port through which the content is to be output is not included in the types of output ports included in the output control information.

The content protection technology which is applied to the output port may comprise at least one of digital transmission content protection (DTCP), high-bandwidth digital content protection (HDCP), Windows Media digital rights management (WMDRM), an analog protection system (APS), and copy generation management system analogue (CGMS-A).

The method may further comprise: receiving license information showing the right of the use of the content; and determining whether the content device is authorized to output the content based on the input license information.

According to another aspect of the present invention, there is provided an apparatus for controlling an output of a content device, the apparatus comprising: a user interface unit which receives a request signal for requesting use of content; a software executing unit which executes software for decrypting the content in response to the request signal; and a control unit which controls the decrypted content to be output through an output port that is allowed by the executed software.

The control unit may comprise a reading unit which reads output control information about output ports that are allowed by the executed software; and an output processing unit which controls the output of the content based on the read output control information.

The output control information may describe the types of output ports that are allowed by the software when the content is output, or describe the types of output ports to which a content protection technology that is allowed by the software is applied, and the output control information may be devised in a form that can be interpreted by software or hardware.

The output control information may be defined by the software and stored in a predetermined storage medium when the software is installed in the content device, and when the user interface unit receives the request signal, the reading unit may read the output control information corresponding to the executed software from the storage medium.

The output control information may be included in execution code of the software, and when the user interface receives the request signal, the reading unit may read the output control information from the executed software.

The output processing unit may refuse the output of the content when the output port through which the content is output is not included in the types of output ports included in the output control information.

The content protection technology which is applied to the output port may comprise at least one of DTCP, HDCP, WMDRM, APS, and CGMS-A.
The software executing unit may comprise a license input unit which receives license information showing the right of the use of the content, and a license processing unit which determines whether or not the content device is authorized to output the content based on the input license information.

The control unit may request the software executing unit to permit the content to be output through a predetermined output port when the control unit desires to output the content through the output port, and the control unit controls the content to be output through the output port only when receiving the output permission from the software executing unit.

The output control information may be included in execution code of the software, and when the control unit requests the software executing unit to permit the content to be output through the output port, the software executing unit may allow the output of the content when the requested output port is one of the types of the output ports included in the output control information.

The output control information may be defined by the software and stored in a predetermined medium storage when the software is installed in the content device, and when the control unit requests the output permission of the content through the output port, the software executing unit may read the output control information, and allow the output of the content when the requested output port is one of the types of the output ports included in the read output control information.

According to yet another aspect of the present invention, there are provided a computer readable recording medium having embodied thereon a computer program for executing the method, and a content reproducing device in which the apparatus is installed.

The above and other exemplary aspects of the present invention will become more apparent by the following detailed description of exemplary embodiments thereof with reference to the attached drawings in which:
FIG. 1 is a block diagram of a related art content device that reproduces content and in which a content protection system in the form of software is installed;
FIG. 2 is a flowchart for explaining a method of controlling an output of a content device, according to an exemplary embodiment of the present invention;
FIG. 3 is a flowchart for explaining a method of controlling an output of a content device, according to another exemplary embodiment of the present invention;
FIG. 4 is a flowchart for explaining a method of controlling an output of a content device, according to another exemplary embodiment of the present invention;
FIG. 5 is a block diagram of an output control device of a content device, according to an exemplary embodiment of the present invention; and
FIG. 6 is a block diagram of an output control device of a content device, according to another exemplary embodiment of the present invention.

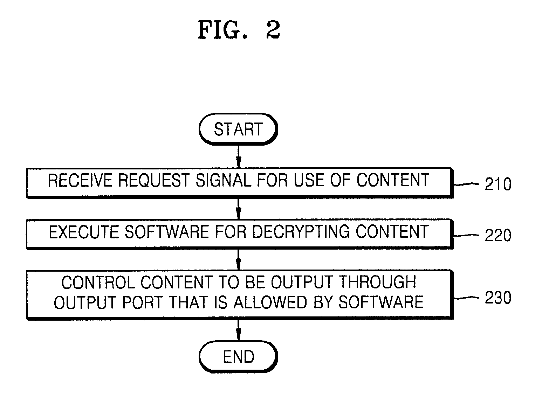

FIG. 2 is a flowchart for explaining a method of controlling an output of a content device, according to an exemplary embodiment of the present invention.
Referring to FIG. 2, the method of controlling an output of a content device according to the current embodiment of the present invention includes operations of: receiving a request signal that requests use of encrypted contents (operation 210); executing a software program for using the encrypted contents in response to the received request signal (operation 220); and controlling the content device to output the encrypted contents through an output port allowed by the executed software program (operation 230).

The content device can use content which is encrypted using a specific content protection system, and can have more than one software program installed and executed. The content protection system may be, for example, a content use/access control system such as DRM, or a conditional access system, a content protection system for an optical media such as an AACS, a content scrambling system, or any kind of content protection system.

More specifically, the method according to the current embodiment of the present invention includes: receiving a request signal requesting use of the encrypted content through a user interface (operation 210); executing a content protection software for decrypting the content to be used (reproduced, edited, saved, output, and so on) in response to the request signal (operation 220); controlling the decrypted content to be output through an output port allowed by the executed content protection software (operation 230).

The output of the content may be controlled by, for example, reading and interpreting compliance rules regarding the content protection software. The compliance rules include information on a content output port allowed by the content protection software and are devised in a form that the content device can interpret.

The compliance rules are rules about the use of the content, and must be complied with by a device to which the content protection system is applied. The compliance rules typically list the types of output ports that are allowed to output the decrypted content. For example, in an AACS that is a content protection system that a high-definition (HD) DVD or Blu-ray disc uses, the content may be allowed to be output through a particular output port that is protected by, for example, digital transmission content protection (DTCP), high-bandwidth digital content protection (HDCP), Windows Media digital rights management (WMDRM), an analog protection system (APS), and a copy generation management system/analogue (CGMS-A). That is, the content is allowed to be output through an output port to which a specific protection system is applied so that the content is prevented from being illegally used. Therefore, the content is output through an output port allowed by the compliance rules. Content protection methods include content protection for recordable media (CPRM), TiVoGuard, a video content protection system (VCPS), MagicGate, a digital video home system (D-VHS), Helix DRM, and the like, including those that the Federal Communication Commission (FCC) has authorized.

The content protection software may be a content protection process that is operated independently or be formed of application program interface (API) functions that are called by the content device.

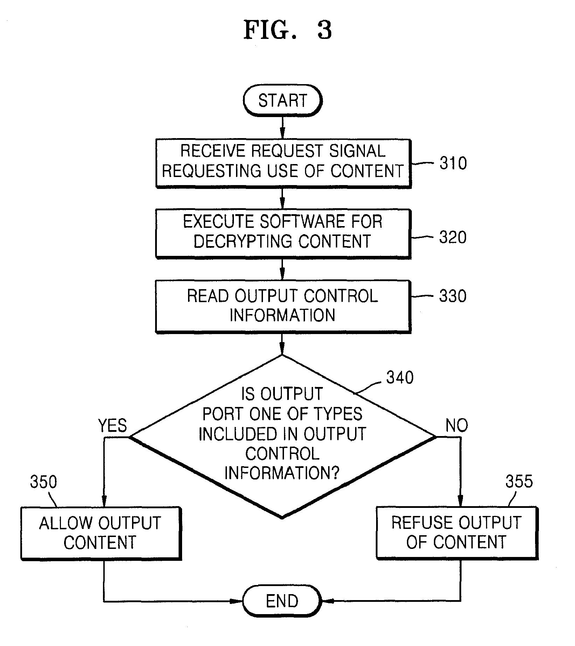

FIG. 3 is a flowchart for explaining a method of controlling an output of a content device, according to another exemplary embodiment of the present invention.
Here, it is assumed that when content protection software is installed in the content device, compliance rules of the software are also installed.

Referring to FIG. 3, in operation 310, a request signal that requests use of encrypted content is received from a user, and in operation 320, content protection software is executed to decrypt and use (reproduce, edit, save, output, and so on) the content.

In operation 330, output control information is read, and the output control information is a kind of metadata that shows a type of an output port allowed by the content protection software, and is devised in a form that the content device can interpret. That is, when the content protection software is installed in the content device, the output control information including the compliance rules of the software is also installed (stored) in the content device.

In operation 340, when the content device outputs the content, it is determined if an output port to be used is in accordance with the output control information. That is, only when the output port through which the user wants to output the content meets the requirements of the content protection software, is the output allowed (operation 350).

Conversely, if an output port through which the user wants to output the content does not meet the requirements of the compliance rules of the output control information, the output of the content is refused (operation 355), and a message indicating that it is not possible to selectively output the content may be sent to the user through a user interface.

For example, if the executed content protection software is DRM software and the content to be used is controlled by a license, the DRM software receives and interprets the licence of the content, and additionally determines whether the user has been authorized to use the content. If it is determined that the user does not have the right to use the content, a message indicating that the user is not allowed to use the content may be provided to the user through a user interface.

The above-described content and license may be provided from a storage medium inside the content device, be provided through a network, or be provided from an external storage device such as a DVD.

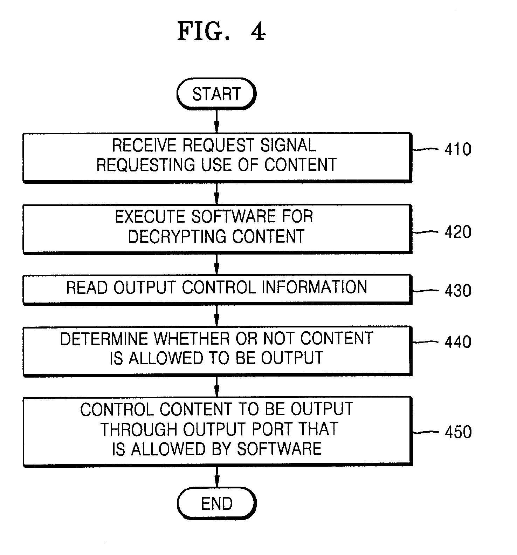

FIG. 4 is a flowchart for explaining a method of controlling an output of a content device, according to another exemplary embodiment of the present invention.

Referring to FIG. 4, the method of controlling an output of a content device according to the current embodiment of the present invention includes operations 410 to 150.

In operation 410, a request signal that requests use of encrypted content through a user interface is received.

In operation 420, content protection software necessary for using (reproducing, editing, saving, outputting, and so on) the content is executed in response to the request signal.

In operation 430, output control information is read while executing the content protection software. Here, the output control information describes the types of output ports to which a content protection technology that the corresponding content protection software requires when the device outputs the content is applied, and is defined in execution code of the content protection software.

In operation 440, it is determined whether the output port to be used is included in the types of the output ports which are defined by the output control information when the device outputs the content. In other words, it is determined whether the content can be output, and only when it is determined that the output port through which the user wants to output the content satisfies the requirements of the content protection software, is the content allowed to be output, and, conversely, when the output port is not in accordance with the compliance rules of the content protection software, the content is not allowed to be output.

In operation 450, the decrypted content is controlled to be output through the output port allowed by the executed content protection software according to the result of the determination.

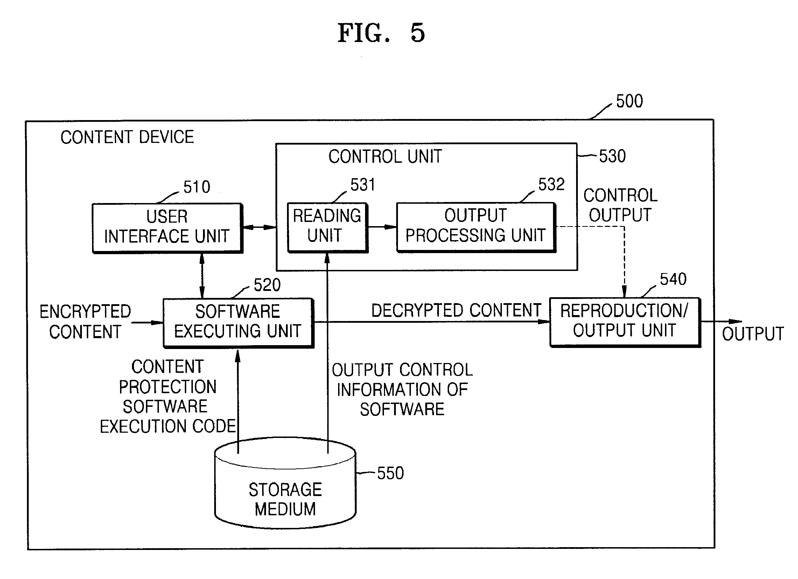

FIG. 5 is a block diagram of an apparatus for controlling an output of a content device 500, according to an exemplary embodiment of the present invention.

Referring to FIG. 5, the apparatus includes a user interface unit 510, a software executing unit 520, a control unit 530, a content reproduction/output unit 540, and a storage medium 550. The user interface unit 510 receives a request signal that requests use of encrypted content, and the software executing unit 520 executes content protection software for decrypting and using the content in response to the received request signal. Execution code of the content protection software can be obtained from the local storage medium, but it is obvious to those of ordinary skill in the art that the execution code can also be obtained from a remote storage medium.

The control unit 530 controls the decrypted content to be output through an output port allowed by the content protection software executed by the software executing unit 520. The control unit 530 may further include a reading unit 531 that reads output control information of the output port allowed by the content protection software from the storage medium 550, and an output processing unit 532 that controls the output of the content according to the read output control information. The content reproduction/output unit 540 copies the decrypted content to an external device or outputs the content on a screen according to the control of the control unit 530.

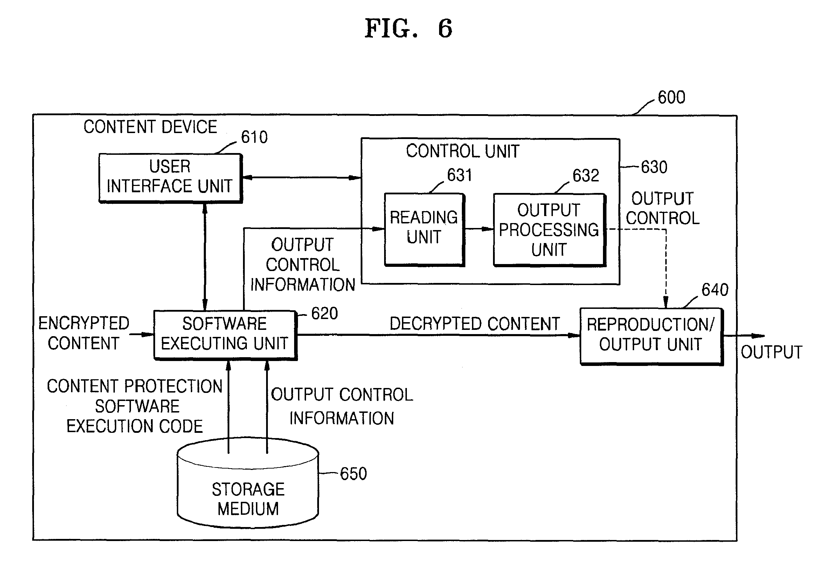

FIG. 6 is a block diagram of an apparatus for controlling an output of a content device 600 according to another exemplary embodiment of the present invention. Referring to FIG. 6, like the output control apparatus illustrated in FIG. 5, the apparatus for controlling an output of the content device 600 includes a user interface unit 610 which receives a request signal that requests use of encrypted content, a software executing unit 620 which executes content protection software to decrypt and use the content in response to the request signal, and a control unit 630 which controls a content reproduction/output unit 640 to output the content through an output port allowed by the content protection software executed by the software executing unit 620. The content device 600 includes the content reproduction/output unit 640 and a storage medium 650 which stores execution code of the content protection software.

However, in the present exemplary embodiment, the control unit 630 receives output control information of the content from the content protection software instead of reading the output control information directly from the storage medium 650. In this case, the output control information may be stored in the storage medium 650, may be read by the content protection software, and then be transmitted to the control unit 630, or the output control information may be initially included in the execution code of the content protection software, and then be transmitted to the control unit 630 in the course of executing the content protection software. The control unit 630 receives the content control information from the content protection software, and then performs the output control process of the content. In the course of transmitting the output control information to the control unit 630, the content protection software may transmit metadata-type information about all types of output ports to the control unit 630. Alternatively, when the control unit 630 informs the content protection software of the specific type of an output port through which the content is output, the content protection software transmits the result, which shows whether or not the content can be output through the corresponding output port, to the control unit 630 based on the output control information read in the storage medium 650 or the output control information included in the execution code, and the control unit 630 may control the output of the content based on whether or not the content can be output. As such, the present invention controls the output of the content based on the output control information.

Although it is not illustrated, the software executing unit 620 may further include a license input unit which receives license information showing the right of using the content, and a license processing unit which determines whether or not the content can be output based on the license information.

The method of controlling an output of a content device according to the present invention can be written as computer programs and can be implemented in general-use digital computers that execute the programs using a computer readable recording medium.

Also, the structure of data used in the present invention may be recorded on the computer readable recording medium using various means.

Examples of the computer readable recording medium include magnetic storage media (e.g., ROM, floppy disks, hard disks, etc.), and optical recording media (e.g., CD-ROMs, or DVDs).

According to the present invention, a method and apparatus for controlling an output of a content device can apply compliance rules to the device dynamically when the compliance rules are required by different content protection technologies. Therefore, while the content device does not violate the compliance rules required by the content protection technologies, the content device can safely use the content through various pieces of content protection software.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of controlling output of a content device, the method comprising:
receiving a request signal that requests use of encrypted content;
executing a program for decrypting the encrypted content in response to the received request signal; and
controlling the decrypted content to be output through an output port that is allowed by the executed program.

2. The method of claim 1, wherein controlling the decrypted content comprises:
reading output control information about the output port that is allowed by the software; and
controlling output of the decrypted content based on the read output control information.

3. The method of claim 2, wherein the output control information describes an allowable type of output port that is allowed by the program when the content is output, and types of output ports to which a content protection technology that is allowed by the program are applied, and
wherein the output control information can be interpreted by software and hardware.

4. The method of claim 2 or 3, wherein the output control information is defined by the program and stored in a storage medium when the program is installed in the content device, and the output control information corresponding to the program is read from the storage medium during execution of the program.

5. The method of claim 2 or 3, wherein the output control information is included in execution code of the program, and the output control information is read from the program during execution of the program.

6. The method of claim 3, wherein controlling the output of the decrypted content comprises refusing the output of the content when an output port through which the content is to be output is not included in the types of output port included in the output control information.

7. The method of claim 6, wherein the content protection technology which is applied to the output port comprises at least one of digital transmission content protection, high-bandwidth digital content protection, Windows Media digital rights management, an analog protection system, and copy generation management system analogue.

8. The method of claim 6 or 7, further comprising:
receiving license information showing right of the use of the content; and
determining whether the content device is authorized to output the content based on the input license information.

9. An apparatus for controlling output of a content device, the apparatus comprising:
a user interface unit for receiving a request signal for requesting use of content;
a program executing unit for executing a program for decrypting the content in response to the request signal; and
a control unit for controlling the decrypted content to be output through an output port that is allowed by the executed program.

10. The apparatus of claim 9, wherein the control unit comprises:
a reading unit for reading output control information about output ports that are allowed by the executed program; and
an output processing unit for controlling output of the content based on the read output control information.

11. The apparatus of claim 10,
wherein the output control information describes one of types of output ports that are allowed by the program when the content is output, and types of output ports to which a content protection technology that is allowed by the program is applied, and
wherein the output control information is devised in a form that can be interpreted by software and hardware.

12. The apparatus of claim 10 or 11, wherein the output control information is defined by the program and stored in a storage medium when the program is installed in the content device, and in response to the user interface unit receiving the request signal, the reading unit is arranged to read the output control information corresponding to the executed program from the storage medium.

13. The apparatus of claim 10 or 11, wherein the output control information is included in execution code of the program, and in response to the user interface receiving the request signal, the reading unit is arranged to read the output control information from the executed program.

14. The apparatus of claim 11, wherein the output processing unit is arranged to refuse the output of the content if the output port through which the content is output is not included in the types of output ports included in the output control information.

15. The apparatus of claim 14, wherein the content protection technology which is applied to the output port comprises at least one of digital transmission content protection, high-bandwidth digital content protection, Windows Media digital rights management, an analog protection system, and copy generation management system analogue.

16. The apparatus of claim 14 or 15, wherein the program executing unit comprises:
a license input unit for receiving license information showing a right of the use of the content, and
a license processing unit for determining whether or not the content device is authorized to output the content based on the input license information.

17. The apparatus of any one of claims 11 to 16, wherein the control unit is arranged to request the program executing unit to permit the content to be output through a predetermined output port if the control unit desires to output the content through the output port, and the control unit is arranged to control the content to be output through the output port only in response to receiving the output permission from the program executing unit.

18. The apparatus of claim 17, wherein the output control information is included in execution code of the program, and if the control unit requests the program executing unit to permit the content to be output through the output port, the program executing unit is arranged to allow the output of the content if the requested output port is one of the types of the output ports included in the output control information.

19. The apparatus of claim 17, wherein the output control information is defined by the program and stored in a predetermined medium storage when the program is installed in the content device, and if the control unit requests the output permission of the content through the output port, the program executing unit is arranged to read the output control information, and allow the output of the content when the requested output port is one of the types of the output ports included in the read output control information.

20. A computer readable recording medium having embodied thereon a computer program for executing the method of any one of claims 1 to 8.
